# EUROPEAN PATENT APPLICATION

(11) **EP 1 387 550 A2**
(43) Date of publication of application: **04.02.2004**
(21) Application number: 03017310.8
(22) Date of filing: 31.07.2003
(51) Int. Cl.: H04L 29/06

(54) **Method and system for preventing unauthorized access to the internet**

(30) Priority: 02.08.2002 US 210885
(71) Applicant: Hashimoto, Noriaki, Kawaguchi-shi, Saitama-ken 333-0834 (JP)
(72) Inventor: Hashimoto, Noriaki, Kawaguchi-shi, Saitama-ken 333-0834 (JP)
(74) Representative: Pfeifer, Hans-Peter, Dr.

(57) **Abstract**

A method and system for preventing an unauthorized access to the Internet by a user or a user computer based on authorization data. The method includes identifying an access by the user or the user computer at or before an entry point and receiving incoming authorization data associated with the access. It also includes analyzing the incoming authorization data using information contained in an authorization database to determine the access is authorized and blocking the access beyond the entry point if the access is not authorized. The system includes a memory containing an authorization database related to the user or the user computer and a microprocessor. The microprocessor is programmed to block an access beyond an entry point by the user or the user computer when an analysis of incoming authorization data received from the user or the user computer based on information contained in the authorization database indicates that the access is unauthorized.

## Description

### CROSS REFERENCE TO RELATED APPLICATION

This application is a continuation-in-part of U.S. Patent Application Serial No. 09/690,818, filed on October 18, 2000, entitled Method And System For Preventing Unauthorized Access To A Network, which is incorporated herein by reference in its entirety.

### BACKGROUND OF THE INVENTION

### Field of the Invention

The present invention relates to a method and system for preventing an unauthorized access to the Internet. The invention uses a plurality of systems and software to protect the Internet from an unauthorized access.

### Discussion of the Related Art

The Internet has experienced and will continue to experience an explosive growth. The Internet was originally designed to provide a means for communicating information between public institutions such as universities. However, with the development and provision of user-friendly tools for accessing the Internet, the public at large is increasingly turning to the Internet as a source of information and as a means for communicating information. Furthermore, both consumers and companies are turning to the Internet as a means for conducting a variety of business and financial transactions.

The Internet's success is based partly on the openness of its protocols: TCP (Transmission Control Protocol) and IP (Internet Protocol). Internet protocols operate by breaking up a data stream into data packets. Each data packet includes a data portion and address information. The IP is responsible for transmitting data packets from a sender to a receiver over a most efficient route. The TCP is responsible for flow management and for ensuring that packet information is correct. Details of the two protocols are available to the public and are known to those skilled in the art.

The Internet is different from private networks in several aspects. For example, while private networks often use their own protocols, the Internet is based on open protocols, such as TCP and IP. Private networks may be configured in a variety of ways―their architectures and applications may be tailored to fit the needs of their owners and/or users. Unlike private networks, various characteristics of the Internet,such as its architecture, protocols, and related applications, are disclosed to the public. In other words, unlike private networks, it is easy for an individual to obtain knowledge of the Internet necessary to interact with or affect the Internet in a desired manner.

As the popularity of the Internet grows, so has the number of malicious acts committed over the Internet. More recently, malicious acts committed over the Internet have caused major disruptions in daily lives of those who rely on the Internet. For example, there have been a number of widely reported malicious acts over the Internet based on computer viruses including the Melissa and Explore.zip viruses and the "I Love You" worm. These viruses spread over computer networks worldwide in a matter of days via the Internet and have caused millions of dollars in damages. Besides computer viruses, the Internet has been used to launch denial of service attacks against popular web sites and vandalize home pages of private and public institutions.

Despite serious economic damages caused by malicious acts over the Internet, efforts by business and government institutions to detect arid prevent such acts have not been very effective. This is partly due to the open nature of the Internet. Individuals who wish to attack a private network without any authorization need to understand the private network such as its structure, protocols, operation systems, related applications, etc. Further, such information is typically not available to the public. This closed nature of private networks makes it more difficult for individuals to gain enough knowledge to attack them. The Internet due to its open architecture, on the other hand, cannot rely on secrecy or lack of knowledge to deter individuals from attacking it. Further, the Internet is not only open in terms of its architecture but also in terms of its access, that is the Internet is a public network that is accessible by millions of people without prior authorization. This open access nature of the Internet adds another hurdle to those who wish to defend the Internet.

Existing security measures do not fully consider the openness of the Internet, and thus have failed to provide an adequate protection. Shortcomings of existing security systems include allowing those who wish to commit malicious acts or crimes to access the Internet or a network connected to the Internet. For once an access is granted, such individuals can take advantage of the openness of the Internet to commit malicious acts or crimes. In other words, existing security systems assume attacks are inevitable and focus on defending against them. By focusing on defending against attacks, they do not attempt to prevent an unauthorized access to the Internet by those who might commit malicious acts or crimes. Thus, there is a need for a system and method for increasing Internet security by preventing an unauthorized access to the Internet.

### SUMMARY OF THE INVENTION

Accordingly, the present invention is directed to a method and system for preventing an unauthorized access to the Internet. Specifically, the present invention is directed to a method and system for preventing an unauthorized access to the Internet at or before an entry point by blocking an access by an unauthorized user or user computer beyond the entry point.

To achieve these and other advantages and in accordance with the purpose of the present invention, as embodied and broadly described, the present invention includes a method for preventing an unauthorized access to the Internet by a user or a user computer based on authorization data. The method includes identifying an access by the user or the user computer at or before an entry point and receiving incoming authorization data associated with the access. It also includes analyzing the incoming authorization data using information contained in an authorization database to determine the access is authorized and blocking the access beyond the entry point if the access is not authorized.

In another aspect, the present invention includes an access control system for preventing an unauthorized access to the Internet by a user or a user computer. The system includes a memory containing an authorization database related to the user or the user computer. It also includes a microprocessor programmed to block an access beyond an entry point by the user or the user computer when an analysis of incoming authorization data received from the user or the user computer based on information contained in the authorization database indicates that the access is unauthorized.

In another aspect, the present invention includes a method for preventing an unauthorized access to the Internet by a user or a user computer. The method includes identifying an access by the user or the user computer at or before an entry point and receiving incoming authorization data for the access. It also includes analyzing the incoming authorization data using information contained in an authorization database to determine whether the access is authorized and causing the access to be blocked at or before the entry point if the access is not authorized.

In yet another aspect, the present invention includes a system for preventing an unauthorized access to the Internet by a user or a user computer. The system includes means for identifying an access by the user or the user computer at or before an entry point and means for receiving incoming authorization data for the access. It also includes means for analyzing the incoming authorization data using information contained in an authorization database to determine whether the access is authorized and means for causing the access to be blocked at or before the entry point if the access is not authorized.

In further aspect, the present invention includes a computer-readable medium containing instructions for controlling a computer system to perform a method for preventing an unauthorized access to the Internet by a user or a user computer. The method includes identifying an access by the user or the user computer at or before an entry point and receiving incoming authorization data for the access. It also includes analyzing the incoming authorization data using information contained in an authorization database to determine whether the access is authorized and causing the access to be blocked at or before the entry point if the access is not authorized.

Additional features and advantages of the invention will be set forth in the description, which follows, and in part will be apparent from the description, or may be learned by practice of the invention. The objectives and other advantages of the invention will be realized and attained by the structure particularly pointed out in the written description and claims hereof as well as the appended drawings

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention. In the drawings:
FIG. 1 is a diagram of one embodiment of the present invention that uses access control systems;
FIG. 2 is a diagram of a second embodiment of the present invention that uses access control systems;
FIG. 3 is a diagram of a third embodiment of the present invention with access control systems;
FIG. 4 is a diagram of an embodiment of an access control system of the present invention;
FIG. 5 is a flow chart depicting operations that may be performed by one embodiment of an access control system of the present invention;
FIG. 6 is a diagram of an alternative embodiment of an access control system of the present invention;

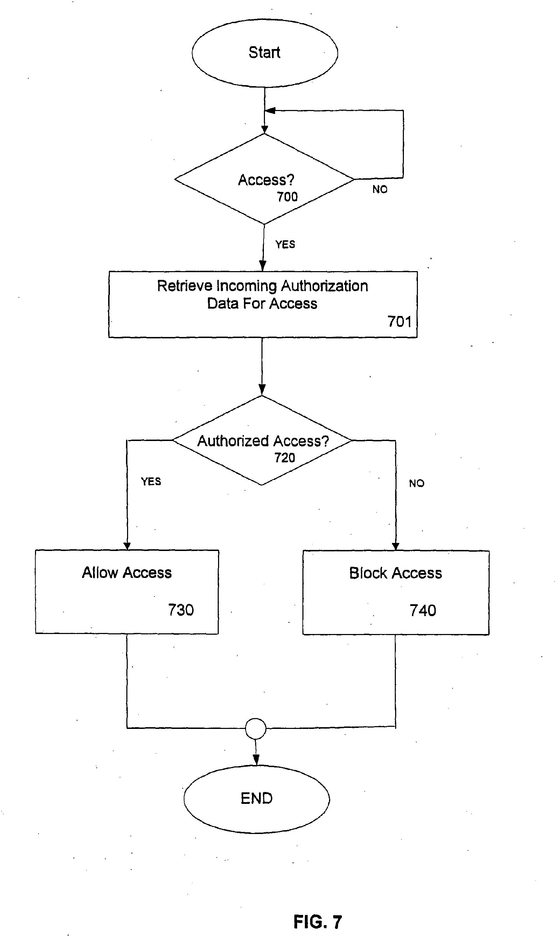

FIG. 7 is a flow chart describing operations that may be performed by one embodiment of the present invention; and
FIG. 8 is a schematic diagram depicting an area where an entry point may be located in one embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

A user or user computer goes through an entry point before it gains an access to the Internet. User computers include devices with an Internet access such as personal computers, laptops, personal data assistants, mobile phones, televisions, game consoles, etc. An entry point can lie anywhere between the Internet and a user or user computer that is used to access the Internet. For example, an entry point may be at a user computer used to access the Internet, in a network between a user computer and the Internet, or at a device accessed prior to reaching the Internet. Further an entry point may be at an entrance to a room that houses computers with an Internet access. In other words, the present invention is not dependant upon a location of an entry point, so long as it is set somewhere before a data packet sent by a user or a user computer reaches the Internet. Further, the present invention may use one or more entry points.

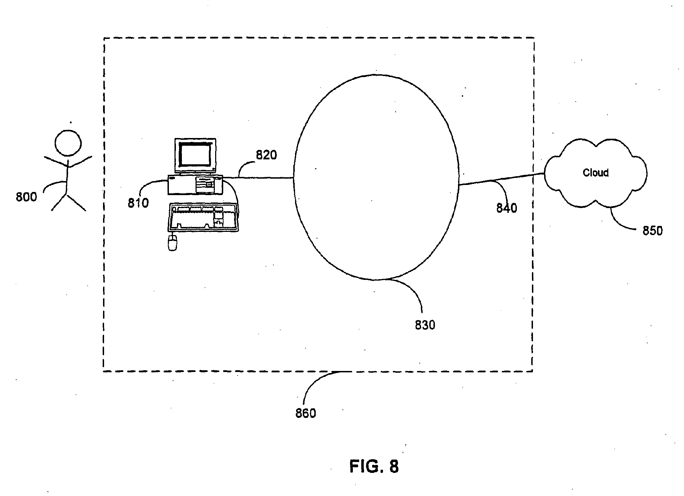

FIG. 8 is a schematic diagram showing an area 860 where an entry point may be located in one embodiment of the present invention. In the embodiment of FIG. 8, a user 800 has an access to the Internet 850 via a user computer 810. The user computer 810 is connected by a network 820 to a larger network 830, which is connected to the Internet 850 via a network 840. The larger network 830 may be a local or wide area network. It may contain one or more computers, servers, modems, hubs, or other devices. Devices within the network 830 may or may not be accessible by the user computer 810. In this embodiment, an entry point may be located anywhere between the user 800 and the Internet 850. In other words, it may be contained in a device or devices located within the area 860. For example, it may be located between the user 800 and the user computer 810. It may be located somewhere in the networks 820 and 840, anywhere in the network 830, or a device in the network 830. If access control systems are used, they may also be located within the area 860 at or before an entry point.

At or before an entry point, an unauthorized access may be identified and/or blocked. An unauthorized access may be defined based on various types of authorization data. Authorization data may be user or access characteristics. User characteristics may be defined in terms of something that a user knows, has, or is. User characteristics based on user's knowledge include a user ID, password, or any other piece of personal information. User characteristics based on user's possession include a card key, IC card, smart card, magnetic card, digital signature, etc. Biometric user characteristics include user's unique physical or behavioral characteristics. Examples of physical biometrics include: fingerprints; hand or palm geometry; DNA; and retina, iris, or facial characteristics. Examples of behavioral characteristics include signature, handwriting, voice, keystroke pattern, and gait. Access characteristics may be defined in terms of characteristics of a user or user computer attempting to send a data packet to the Internet. They include IP addresses, remote-access or callback features, encryption systems, digital signatures, etc. Those skilled in the art would know that the present invention may be used to accommodate various types of authorization data and thus prevent various types of an unauthorized access defined in terms of authorization data. In other words, the present invention is not dependent on types of unauthorized access or authorization data.

Typically, there are one or more authorization databases containing authorization data of users or user computers. For simplicity, one or more authorization databases are referred to as an authorization database. In other words, the term "an authorization database" refers to one or more databases that contain authorization data. An authorization database may be located in a memory of one system, device or computer. It may be distributed across two or more systems, devices, or computers. It may also be replicated in one or more systems, devices, or computers.

When using user characteristics as authorization data, an authorization database may contain user characteristics of authorized users. For example, when using fingerprints as authorization data, an authorization database may consist of fingerprints of authorized users. When using access characteristics, such as IP addresses of user computers, as authorization data, an authorization database may be a list of valid or assigned IP addresses.

Incoming authorization data for an access by a user or user computer is compared with information contained in an authorization database to determine whether an access is authorized or not. As such, an access by a user or user computer to be monitored may be defined to make such comparison possible. For example, when using a biometric characteristic as authorization data, an access to be monitored may be an access that occurs at a point where the retrieval of such biometric characteristic of a user is possible. Specifically, if fingerprints are used as authorization data, an access to be monitored may be a user access to a device that is capable of retrieving a fingerprint of a user. If an IP address of a user computer is used as authorization data, an access to be monitored may be an access by a data packet from a user computer to a device that is capable of retrieving an IP address of a user computer from a data packet. Those skilled in the art would know to identify an appropriate access based on desired authorization data.

The present invention may use an access control system to block an unauthorized access by a user or user computer beyond an entry point. An access control system may be software or hardware. An access control system may be placed at an entry point or any point before an entry point. An access control system may recognize an access and determine the access is authorized using information in an authorization database. Further, an access control system, once recognizing an unauthorized access, may cause such access to be blocked.

In determining whether an access is authorized, an access control system may compare incoming authorization data with information in an authorization database. Incoming authorization data may be associated with an access and may be the same type of information as information in an authorization database. An authorization database may reside within an access - control system or remotely in a device or devices accessible to an access control system.

Examples of an access control system are given below and discussed in detail. Other examples include a card reader when using a smart card to define authorization data or a biometric device when authorization data is defined in terms of user characteristics. Those skilled in the art would know to use an access control system that is appropriate for authorization data that they wish to use.

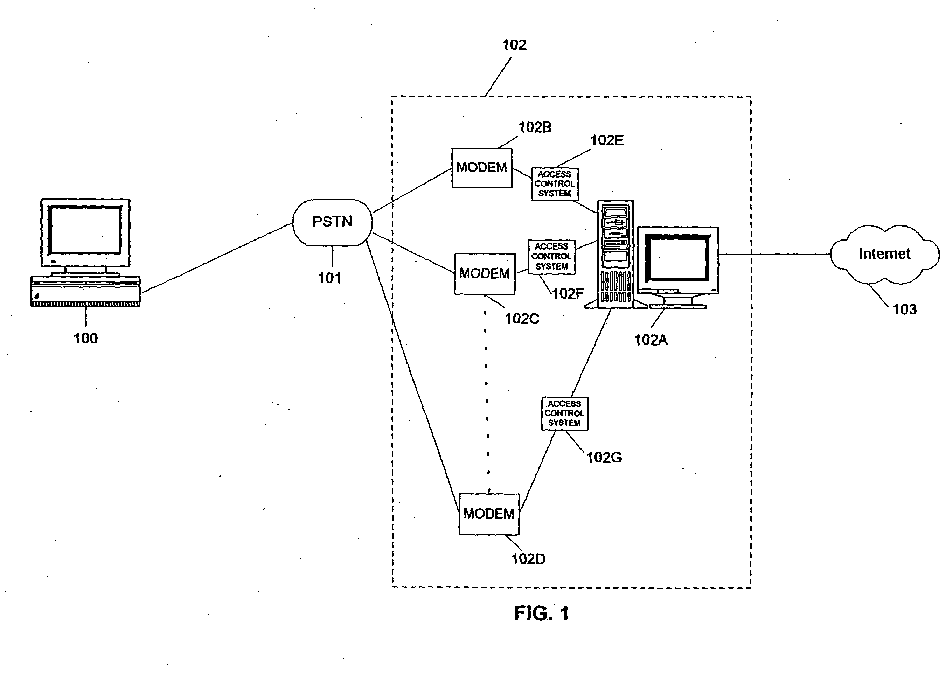

With reference to FIG. 1, one embodiment of the present invention using access control systems includes a user computer 100 connected to a host computer system 102 via Public Switched Telephone Network (PSTN) 101. The user computer 100 accesses the Internet 103 via the host computer system 102. An Internet service provider may operate the host computer system 102. The host computer system 102 comprises a plurality of modems (102B, 102C, and 102D), a plurality of access control systems (102E, 102F, and 102G), and an access server 102A.

In this embodiment, an access control system may be located within or close to the host computer system 102 so that a user has no physical access to it. A user may also be prevented from remotely accessing an access control system to prevent any tampering of an access control system by a user.

FIG. 1 shows the plurality of access control systems (102E, 102F, and 102G) installed between the plurality of modems (102B, 102C, and 102D) and the access server 102A. In this embodiment, an entry point is located between the plurality of modems (102B, 102C, and 102D) and the access server 102A. While FIG. 1 shows one access control system per one modem, one access control system may be connected to more than one modem. Alternatively, one modem may be connected to more than one access control system. Further, the access control systems (102E, 102F, and 102G) may be installed within each of the modems (102B, 102C, and 102D) of the host computer system 102 either as hardware or software. One or more access control systems may also be installed within the access server 102A either as hardware or software.

The access control systems (102E, 102F, and 102G) use information stored in an authorization database to identify an unauthorized access by a user or user computer. For example, an access characteristic such as an IP address assigned to the user computer 100 may be used as authorization data. If an unauthorized access is defined in terms of an IP address assigned to a user computer, an authorization database may contain a list of assigned IP addresses. For simplicity and clarity, the embodiment of FIG. 1 is described using assigned IP addresses of user computers as authorization data. As described above, the present invention is not specific to types of authorization data and those skilled in the art would know to make appropriate modifications when using another type of authorization data.

The host computer system 102 may assign one of the modems connected to the access server 102A to the user computer 100. For example, the user computer 100 might access the Internet 103 using the modem 102B. Then, the access control system 102E may contain an IP address assigned to the user computer 100 and may monitor data packets sent from the user computer 100. In other words, this embodiment may be used to monitor a receipt of a data packet from a user computer and determine unauthorized access based on an originating IP address contained in the data packet.

When the stored IP address does not match an originating IP address of a data packet received from the user computer 100 via the modem 102B, the access control system 102E may terminate the connection between the user computer 100 and the host computer system 102. In other words, the user computer 100 may no longer access the Internet 103. To resume sending data packets to the Internet 103, the user computer may need to reestablish a connection, for example, by logging onto the host computer system 102 again.

The access control systems 102E, 102F, and 102G may terminate the connection between the user computer 100 and the host computer system 102 by electrically cutting off the connection between them or by filtering out data packets sent from the user computer 100. Alternatively, they may issue commands to an appropriate modem or the access server 102A so that either a modem or the access server 102A would terminate the connection between the user computer 100 and the host computer system 102. Other methods of terminating the connection between the user computer 100 and the host computer system 102 will be known to those skilled in the art and are within the scope of this invention.

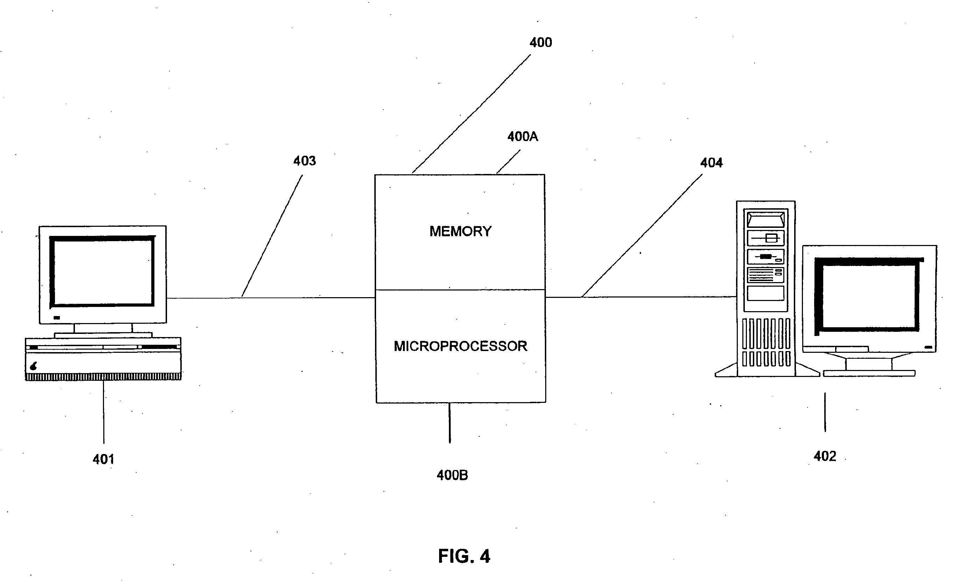

FIG.4 depicts one embodiment of an access control system 400 that is implemented using a separate hardware. As started previously, an access control system may also be implemented by software. When implemented by software, it may run on a separate hardware, a user computer, a host computer system, or other peripherals used to access the Internet such as a modem or a hub. Further, while FIG. 4 depicts a memory 400A and a microprocessor 400B as two separate components, this separation is not required. For example, one may use an internal memory of the microprocessor 400B instead of a separate memory or may use a memory of another device.

In FIG. 4, the access control system 400 is connected to a user computer 401 and a host computer system 402 via network cables 403 and 404. The access control system 400 has the memory 400A and the microprocessor 400B. The memory 400A contains an authorization database containing authorization data related to the user computer 401. The microprocessor 400B may be programmed so that it compares incoming authorization data received from the user computer 401 with information in the authorization database. The access control system 400 may block a further access beyond an entry point, which may be located at the user computer 401, the network cable 403 or 404, the host computer system 402, or any point before reaching the Internet, if an analysis of incoming authorization data indicates an unauthorized access.

The access control system 400 may block a further access using various ways. For example, if an entry point is at the user computer 401, the access control system 400 may disallow an access to the Internet via the user computer 401 by electrically cutting of the connection between the user computer 401 and the host computer system 402. Alternatively, it may disallow logging onto the user computer 401, disallow performing any further operations using the user computer 401, or block all data packets from the user computer 401 beyond an entry point.

The authorization database contained in the memory 400A may need to be periodically updated. For example, if authorization data is an IP address assigned to the user computer 401, upon the termination of the connection between the user computer 401 and the host computer system 402, the authorization data of the user computer 401 may be deleted from the authorization database. If an IP address of the user computer 401 is dynamically assigned, the authorization database may be updated when a new IP address is assigned to the user computer 401. If the user computer 401 has a permanent IP address, the authorization database contains that address. Those skilled in the art would know to properly maintain the authorization database in the memory 400A to ensure its accuracy.

While FIG. 4 shows the access control system 400 with two network connections 403 and 404, it may have more than two connections. In any case, it is preferable that the access control system supports various types of networks such as Ethernet (IEEE 802.3) and a serial network (RS-232C).

An access control system of the present invention may be capable of filtering an access based on authorization data. As described above, authorization data may be based on user characteristics, access characteristics, or other characteristics that characterize those accesses that one wishes to block. While the access control system of 400 is connected to the user computer 401 and monitors an access from that computer, those skilled in the art will know to implement an access control system that is appropriate for authorization data of their choice. Further, while an IP address of a user computer is used as authorization data in describing FIG. 4 for simplicity and clarity, those skilled in the art will know that the access control system of FIG. 4 may be used for other types of authorization data and make appropriate modifications.

An access control system may be programmed so that it is equipped with one or more filtering capabilities. For example, an access control system may use both a user ID and biometric characteristic to identity an unauthorized access. Alternatively, a user may be able to choose from several types of authorization data supported by an access control system, or use more than one type of access control systems to accommodate one or more types of authorization data. Moreover, the access control system may be programmed to switch from one authorization data to another in real time and/or remotely.

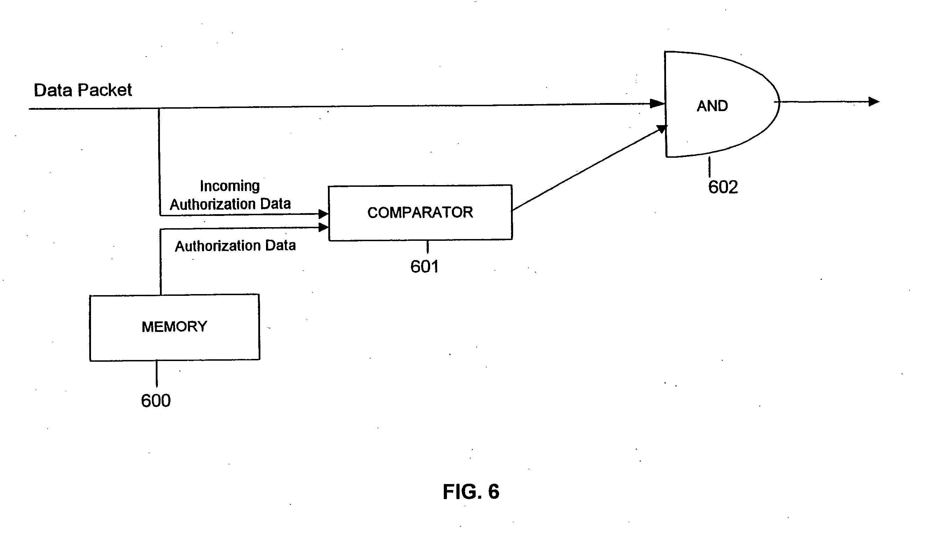

FIG. 6 shows another embodiment of an access control system, which may be used, in the present invention. Under this implementation, the access control system comprises a memory 600 and a comparator structure with a comparator 601 and an AND gate 602. The memory 600 contains authorization database. When the access control system receives incoming authorization data from a user or a user computer, the comparator 601 compares the incoming authorization data with information contained in the authorization database in the memory 600. If the comparison indicates that an access is authorized, the AND gate 602 allows a further access beyond the entry point. If the comparison shows that an access is unauthorized, it blocks the access at or before an entry point. In blocking an access, the access control system, for example, may discard data packets or cause the connection between the user computer and a host computer system to terminate.

FIG; 7 shows exemplary operations performed by one embodiment of the present invention. At step 700, accesses by a user or a user computer is monitored. This monitoring takes place at or before an entry point. If there is an access, incoming authorization data associated with the access is received or retrieved at step 710. At step 720, the incoming authorization data is analyzed using information contained in an authorization database to determine whether the access is authorized. If the access is authorized, the access beyond the entry point is allowed at step 730. If the access is not authorized, the access beyond the entry point is blocked at step 740.

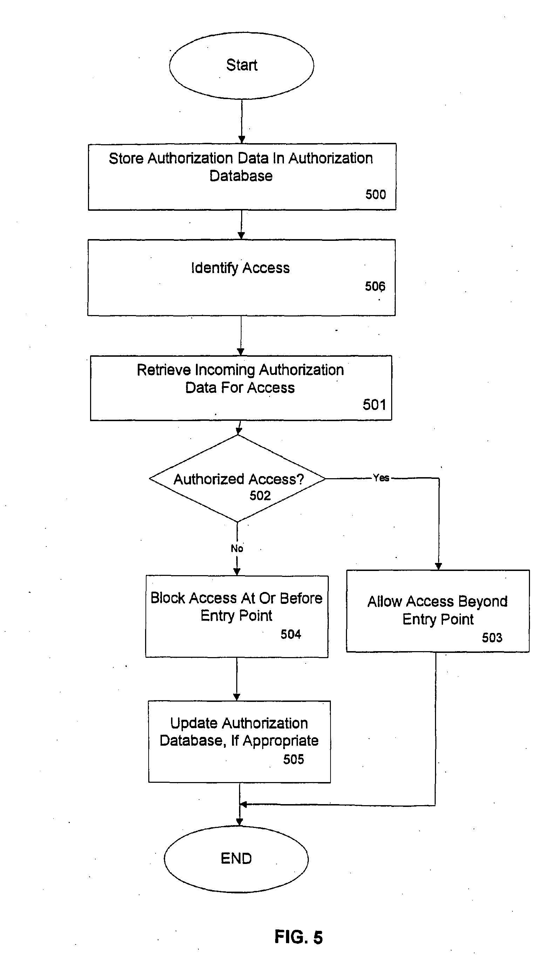

FIG. 5 is used to explain one aspect of operations that may be performed by one embodiment of an access control system that may be used in the present invention. At step 500, authorization data assigned to a user or a user computer is stored in an authorization database located in a memory accessible to the access control system. If the authorization database needs to be updated periodically, this step may be repeated. Alternatively, if the authorization database remains the same after its initialization, the step 500 may need to be executed only once. Further, the access control system may not perform the step 500 at all. For example, the step 500 is not necessary when the authorization database is not maintained by the access control system.

At steps 506 and 501, an access by a user or a user computer is identified and incoming authorization data associated with the access is retrieved. At step 502, the incoming authorization data is compared with information in the authorization database. If the result of the comparison indicates an authorized access, an access beyond an entry point is allowed at step 503. If the result of the comparison indicates an unauthorized access, the access control system causes the access to be blocked at or before the entry point at step 504. Upon causing the access to be blocked, the access control system may cause information in the authorization database to be updated at 505.

As discussed above, an access control system may or may not maintain an authorization database. Alternatively, it may be partially responsible for maintaining an authorization database. As such, those skilled in the art know that an access control system may or may not perform steps 500 and/or 505.

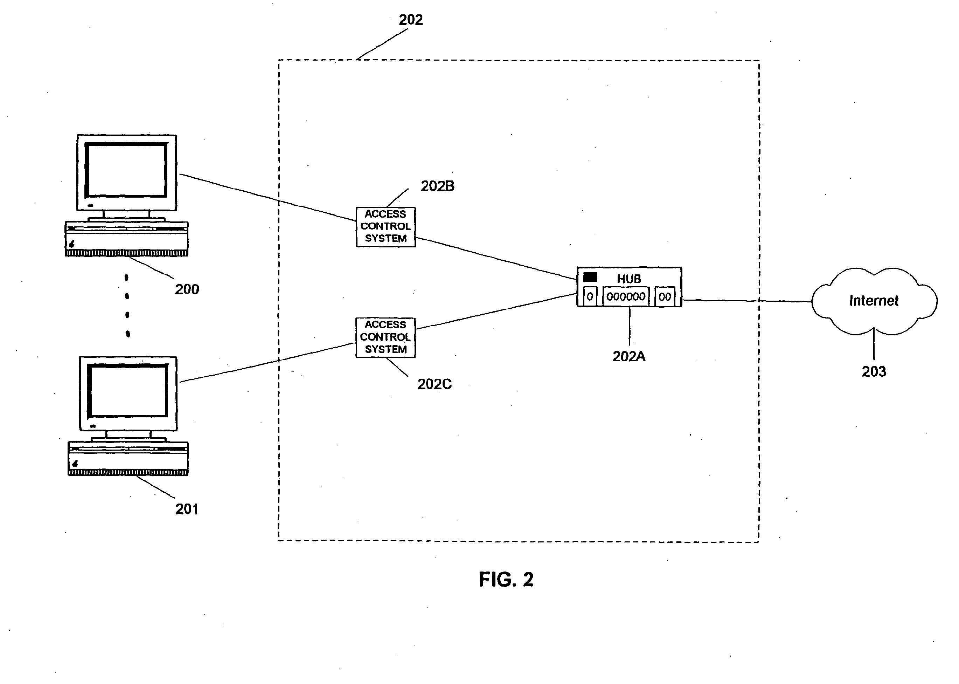

FIG. 2 depicts another embodiment of the present invention. A host computer system 202 includes a hub 202A and access control systems 202B and 202C. User computers 200 and 201 are connected to the hub 202A, for example, via a local area network. The hub 202A provides an access to the Internet 203. In other words, the user computers 200 and 201 access the Internet 203 via the hub 202A.

In FIG. 2, the access control systems 202B and 202C are located between the hub 202A and the user computers 200 and 201, respectively. They may also be implemented within the hub 202A or another system, such as a system provided by an Internet service provider, to which the hub 202A is connected, either as hardware or software. The access control systems may be implemented so that they would not be accessible to users without a proper authorization.

In this example, the access control systems 202B and 202C are responsible for controlling an access to the Internet from the computers 200 and 201, respectively. For example, the access control system 202B may contain authorization data of the user computer 200, and cause an access by the user computer 200 to be blocked beyond the hub 202A if an analysis of incoming authorization data associated with the access indicates that the access is unauthorized. In blocking an access, the access control system 202B may, for example, terminate the connection between the user computer 200 and the hub 202A.

While the diagram depicts a network configured in a star topology with one hub (202A), other network configurations will be known to those skilled in the art and are within the scope of this invention.

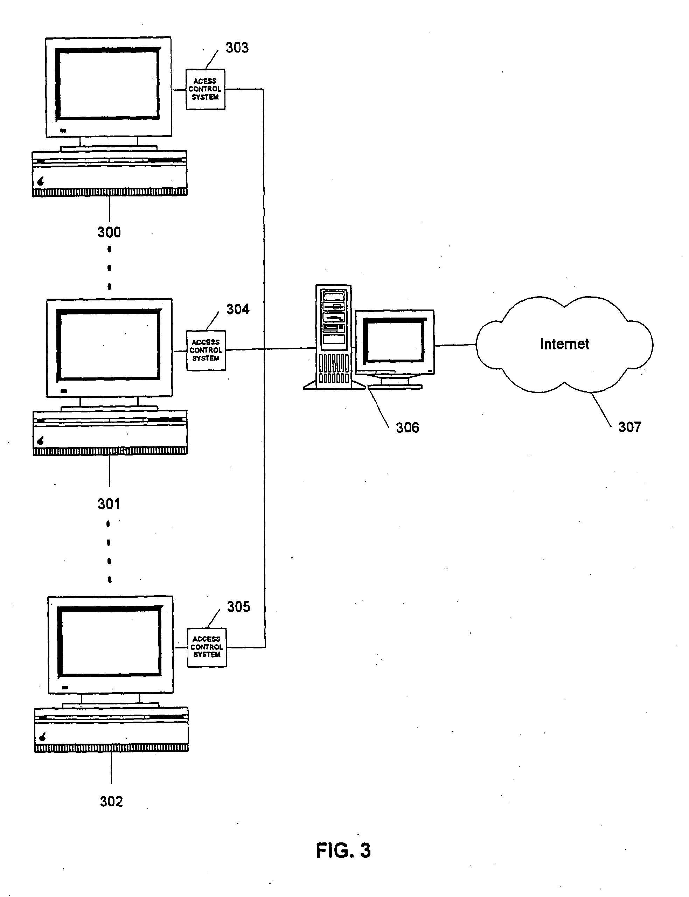

FIG. 3 depicts yet another embodiment of the present invention. User computers 300, 301, and 302 access the Internet 307 though an access server 306. An Internet service provider may operate the access server 306. Alternatively, the access server 306 may be connected to a system operated by an Internet service provider. While this embodiment depicts the user computers (300, 301, and 302) connected via a bus network, other network configurations such as a ring network may be used to implement the secure network of the present invention.

In FIG. 3, access control systems 303, 304 and 305 reside outside the user computers 300, 301, and 302. They are located between each of the three user computers and the access server 306. The access control systems 303, 304, and 305 may also be located within the user computers 300, 301, and 302. Alternatively, one or more access control systems may be located within the access server 306.

Because the access control systems 303, 304, and 305 in FIG. 3 are located near the user computers 300, 301, and 302, users may have a physical access to them. As a result, it may be preferable to add capabilities to the access control systems 303, 304, and 305 so that they may detect a physical tampering and disable an access to the Internet upon a detection of a physical tampering.

The access control systems (303, 304, and 305) in FIG. 3 are programmed to cause an access to the Internet to be blocked beyond an entry point when an unauthorized access is detected. In FIG. 3, an entry point, for example, may be where the access control systems are located or anywhere between the user computers (300, 301, and 302) and the access server 306.

An access control system may be responsible for monitoring incoming authorization data of an access via a user computer connected to it. For example, the access control system 303 may check incoming authorization data associated with a data packet sent from the user computer 300. Upon detecting an unauthorized access by analyzing the incoming authorization data using information in an authorization database, the access control system 303 may cause an access from the user computer 300 to be blocked at or before the entry point. The access control system 303 may do so, for example, by preventing a transmission of any subsequent data packet from the user computer 300 to the Internet. This may be achieved, for example, by electrically cutting off the connection between the user computer 300 and the access server 306 or by filtering out data packets received from the user computer 300. Alternatively, the access control system 303 may issue appropriate commands to the user computer 300 or the access server 306 to terminate the connection.

It will be apparent to those skilled in the art that various modifications and variations can be made in the method and system for preventing unauthorized access to the Internet of the present invention without departing from the spirit or scope of the invention. Thus, it is intended that the present invention covers the modifications and variations of this invention provided they come within the scope of the appended claims and their equivalents.

[57] Further aspects of the invention are summarized by the following statements:
a) A method for preventing an unauthorized access to the Internet by a user or a user computer, comprising: identifying an access by the user or the user computer at or before an entry point; receiving incoming authorization data for the access; analyzing the incoming authorization data using information contained in an authorization database to determine whether the access is authorized; and causing the access to be blocked at or before the entry point, if the access is not authorized.
b) The method of aspect a), wherein the entry point is located between the Internet and the user or the user computer.
c) The method of aspect a) wherein the entry point is located at the user computer.
d) The method of aspect a), further comprising maintaining the authorization database.
e) The method of aspect d), wherein the maintaining step further comprises:
   initializing the authorization database; and updating the authorization database.
f) The method of aspect a), wherein the information contained in the authorization database relates to user characteristics.
g) The method of aspect a), wherein the information contained in the authorization database relates to access characteristics.
h) A system for preventing an unauthorized access to the Internet by a user or a user computer, the system comprising: means for identifying an access by the user or the user computer at or before an entry point; means for receiving incoming authorization data for the access; means for analyzing the incoming authorization data using information contained in an authorization database to determine whether the access is authorized; and means for causing the access to be blocked at or before the entry point, if the access is not authorized.
i) The system of aspect h), wherein the entry point is located between the Internet and the user or the user computer.
k) The system of aspect h), further comprising means for maintaining the authorization database.
l) The system of aspect k), wherein the means for maintaining further comprises: means for initializing the authorization database; and means for updating the authorization database.
m) The system of aspect k), wherein the information contained in the authorization database relates to user characteristic.
n) The system of aspect k), wherein the information contained in the authorization database relates to access characteristics.
o) A computer-readable medium containing instructions for controlling a computer system to perform a method for preventing an unauthorized access to the Internet by a user or a user computer, the method comprising:
   identifying an access by the user or the user computer at or before an entry point; receiving incoming authorization data for the access; analyzing the incoming authorization data using information contained in an authorization database to determine whether the access is authorized; and causing the access to be blocked at or before the entry point, if the access is not authorized.

## Claims

1. Method for preventing an unauthorized access to the Internet by a user or a user computer based on authorization data, the method comprising:
identifying an access by the user or the user computer at or before an entry point;
receiving incoming authorization data associated with the access;
analyzing the incoming authorization data using information contained in an authorization database to determine the access is authorized; and
blocking the access beyond the entry point if the access is not authorized.

2. Method according to claim 1, wherein the blocking step includes preventing a further access by the user or the user computer.

3. Method of claim 1, further comprising maintaining the authorization database.

4. Access control system for preventing an unauthorized access to the Internet by a user or a user computer, the system comprising;
a memory containing an authorization database related to the user or the user computer; and
a microprocessor programmed to block an access beyond an entry point by the user or the user computer when an analysis of incoming authorization data received from the user or the user computer based on information contained in the authorization database indicates that the access is unauthorized.

5. Access control system of claim 4, wherein the entry point is at the user computer.

6. Access control system of claim 4, wherein the entry point is located to block the user an access to a device connected to the Internet.

7. Access control system of claim 4, wherein the memory is a part of the microprocessor.

8. Access control system of claim 4, wherein the memory is remotely located.

9. Access control system of claim 4, wherein the access control system is located at the entry point.

10. Access control system of claim 4, wherein the access control system is located before the entry point.

11. Access control system of claim 4, wherein the microprocessor is further programmed to maintain information in the authorization database.

12. Access control system of claim 4, wherein the microprocessor is further programmed to recognize the access by the user or the user computer.

13. Method of claim 1 or system of claim 4, wherein the entry point is located between the Internet and the user or the user computer.

14. Method of claim 1 or system of claim 4, wherein the authorization data describes user characteristics.

15. Method of claim 1 or system of claim 4, wherein the authorization data describes access characteristics.

16. Computer program product which can be loaded directly into the memory of a digital computer and comprises software sections which are used to execute the steps of the method according to any one of claims 1 to 3 or 13 to 15 when the product is running on a compter.

17. Computer-compatible storage medium containing a computer program product according to claim 16.

18. Computer system, containing a computer program product according to claim 16.
